# EUROPEAN PATENT SPECIFICATION

(11) **EP 0 414 302 B1**
(45) Date of publication and mention of the grant of the patent: **02.03.1994**
(21) Application number: 90202150.0
(22) Date of filing: 08.08.1990
(51) Int. Cl.: B60J 5/04, B60P 3/32

(54) **Vehicle, in particular caravan or camper**
Fahrzeug, insbesondere Wohnwagen oder Campingbus
Véhicule, en particulier caravane ou camping-car

(30) Priority: 22.08.1989 NL 8902122
(43) Date of publication of application: 27.02.1991
(73) Proprietor: POLYPLASTIC B.V., 3044 CK Rotterdam (NL)
(72) Inventor: 't Hoen, Jan, 3135 CZ Vlaardingen (NL)
(74) Representative: de Bruijn, Leendert C.

(56) References cited:
- DE-U- 7 307 907
- LU-A- 66 766
- US-A- 3 822 462

## Description

The invention relates to a vehicle of the type of caravan or camper, at least one wall of which is provided with an opening which can be shut off by a hinged flap or door made of plastic foam which is covered on the inside and outside with a skin or sheet.

Modern caravans and campers normally have a number of storage spaces which can be shut off by a hinged luggage flap. In the known designs the luggage flap or door is entirely inside the peripheral edge of the wall opening. This edge is provided with an aluminium section to which a rubber seal is fastened. The peripheral edge of the flap or door is surrounded by the combination of a PVC section and an aluminium section. The hinges project outside the wall. Said aluminium sections form a cold bridge, which means that in cold weather condensation could occur in the spaces shut off by the flap or door. Caravans and campers are being used to an increasing extent for ski-ing holidays, so that these cold bridges constitute a disadvantage which is not negligible. Other disadvantages of the known design are the relatively large weight and the relatively high costs.

The object of the invention is to avoid the above-mentioned disadvantages, and to this end the vehicle mentioned in the preamble is characterized in that the flap or door has a relatively thin-walled peripheral edge strip which passes through a relatively thin-walled transitional part into the relatively thick-walled remaining part of the flap or door, in that said intermediate part has a flange running outwards from the peripheral edge strip and a flange running parallel to the wall and merging into the thick-walled part, whereby a chamber is bounded by the outside face of the wall, the inside surface of the intermediate part and the edge surface of the thick-walled part extending inwards, which chamber, in the closed position of the flap or door accommodates a sealing strip forming part of a rubber or plastic section fitted on the peripheral edge of said opening, and in that the peripheral edge strip is accommodated in a U-shaped mounting, and at least a part of the U-shaped mounting forms part of the hinge.

Through this positioning of the hinge on the outside surface of the wall, cold bridges can be avoided entirely, and the design is also more attractive in appearance.

It is pointed out that a caravan with hinged window is known from LU-A-66766, in which the peripheral edge strip of the window lies on the outside and opposite the wall of the caravan when the window is closed. This is a single-walled or double-walled look-through window, and not a luggage flap or door. There is still a dish-shaped window plate, the central part of which projects outwards. In the single model the peripheral edge strip passes through an intermediate part into the outward-projecting central part; in the double-walled model there is no such intermediate part. The use of this known principle in a hinged flap or door has the disadvantage that such a flap or door projects outwards in a way which is aesthetically unacceptable.

The essential feature of the invention is that the edge surface of the thick-walled part projects inwards and forms one of the boundary surfaces of the chamber, in which, in the closed position, the sealing strip is accommodated. This measure gives the flap or door an attractive flat outside face which lies a relatively short distance from the particular wall of the caravan. The flap or door is also of a lower weight than known flaps or doors, while in the closed position the seal is also efficient.

The invention also relates to a luggage flap or door obviously intended for a vehicle of the type described above.

The invention will now be explained in greater detail with reference to the figures, in which an example of an embodiment is shown.

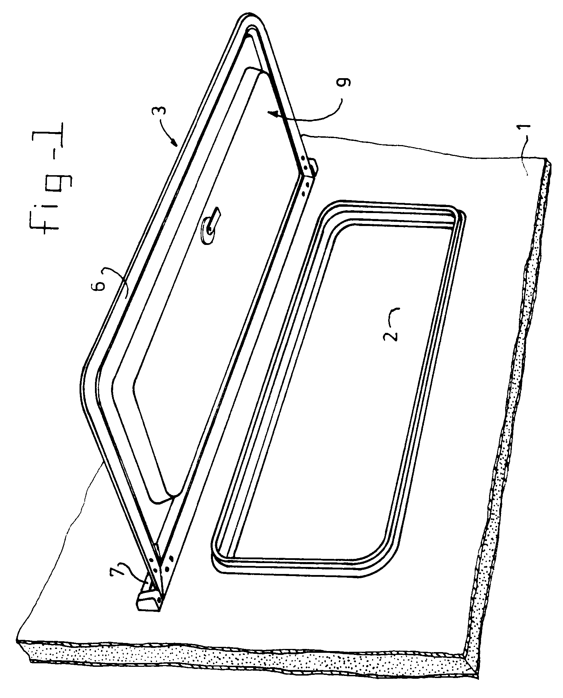

Figure 1 shows a perspective view of a caravan wall with open luggage flap of a storage space.

Figure 2 shows a cross-section through the wall and luggage flap, seen in the closed position of the luggage flap.

The figures show a wall 1 of a caravan or camper with an opening 2 cut out therein, which can be shut off by a luggage flap 3.

A U-shaped section 4 of elastomer material, which is provided on the outside with a tubular seal 4a, is fixed on the peripheral wall of the opening 2.

The luggage flap 3 has a relatively thin peripheral edge strip 5 which projects into a U-shaped mounting 6 and in the closed position of the flap lies on the outside of the wall opposite the outside surface thereof. The top cross-piece of this U-shaped mounting 6 forms part of a horizontal profiled hinge 7 which is screwed onto the outside face of the wall. The peripheral edge strip 5 merges via an intermediate part 8a, 8b into the remaining central flap part 9 which is considerably thicker than the parts 5, 8a, 8b.

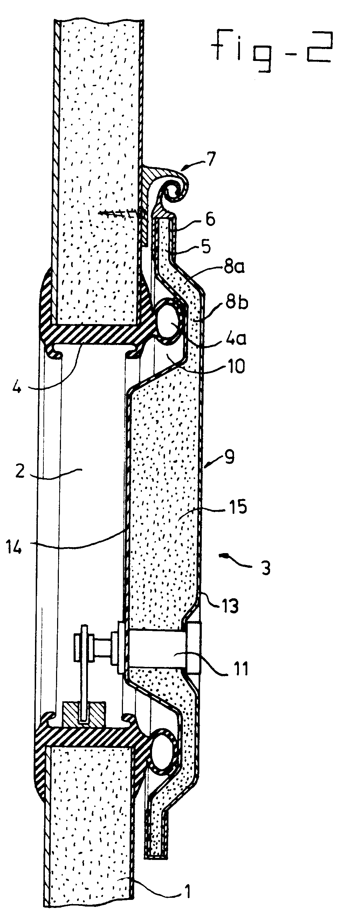

Said intermediate part has a flange 8a running outwards at an angle and a flange 8b running parallel to the wall 1. A chamber 10, which in the closed position of the luggage flap shown in Figure 2 accommodates the tubular seal 4a, is thereby formed. This tubular seal 4a connects to the inside surface of the intermediate part 8a, 8b in a sealing manner.

It will be clear from Figure 2 that cold bridges are avoided entirely. The storage space present behind the opening 2 in the caravan or camper will therefore be extremely well insulated against the cold outside air, so that condensation in that space is prevented.

The lock with which the luggage flap can be locked is indicated by 11, and said lock is made entirely or partially of plastic, so that no cold bridge is present at this point either.

The flap 9 is made of a polyurethane foam core 15, coated on the outside with an aluminium sheet 13, and coated on the inside with an ABS skin 14. The sheets 13 and 14 are made into the desired shape beforehand and then, with spacers placed between them, are provided with the U-shaped section 6 at the peripheral edge. Finally, liquid polyurethane foam is poured into the cavity formed, for example through a hole in the skin 14.

It is important for the invention that the surface area taken up by the flap 3 is greater than the surface area taken up by the opening 2, while the peripheral edge of the flap is a short distance from the outside face of the wall when the flap is closed. It is also important that the peripheral edge strip 5 lying close to the wall 1 in the case of a horizontal or vertical part is hingedly connected to the wall and that a chamber 10 for the accommodation of the tubular seal 4a is formed between the thickened central flap part 9 and the relatively thin peripheral edge strip 5.

Various modifications are possible for example, in the case of a luggage flap the hinge 7 can also be placed at the bottom cross-piece, and the invention can also be used for a door with vertical hinge.

## Claims

1. Vehicle of the type of caravan or camper, at least one wall (1) of which is provided with an opening (2) which can be shut off by a hinged flap (3) or door made of plastic foam which is covered on the inside and outside with a skin or sheet, characterized in that the flap or door has a relatively thin-walled peripheral edge strip (5) which passes through a relatively thin-walled transitional part (8a, 8b) into the relatively thick-walled remaining part of the flap or door, in that said intermediate part (8a, 8b) has a flange (8a) running outwards from the peripheral edge strip (5) and a flange (8b) running parallel to the wall and merging into the thick-walled part, whereby a chamber (10) is bounded by the outside face of the wall (1), the inner surface of the intermediate part (8a, 8b) and the edge surface of the thick-walled part extending inwards, which chamber, in the closed position of the flap or door, accommodates a sealing strip (4a) forming part of a rubber or plastic section (4) fitted on the peripheral edge of said opening (2), and in that the peripheral edge strip (5) is accommodated in a U-shaped mounting (6), and at least a part of the U-shaped mounting forms part of the hinge (7).

## Patentansprüche

1. Fahrzeug in der Art eines Wohnwagens oder Campingbusses, von dem mindestens eine Wand (1) mit einer Öffnung (2) versehen ist, die durch eine Scharnierklappe (3) oder -tür aus Schaumstoff, der auf der Innen- und Außenseite mit einer Haut oder Schicht bedeckt ist, verschlossen werden kann, dadurch gekennzeichnet, daß die Klappe oder Tür einen relativ dünnwandigen Umfangsrandstreifen (5) aufweist, der durch einen relativ dünnwandigen Übergangsteil (8a, 8b) in den relativ dickwandigen verbleibenden Teil der Klappe oder Tür lauft, daß der Zwischenteil (8a, 8b) einen vom Umfangsrandstreifen (5) nach außen abgewinkelten Flansch (8a) und einen parallel zur Wand verlaufenden und in den dickwandigen Teil übergehenden Flansch (8b) aufweist, wodurch eine Kammer (10) von der Außenseite der Wand (1), von der Innenfläche des Zwischenteils (8a, 8b) und von der einspringenden Randfläche des dickwandigen Teils begrenzt ist, welche Kammer bei geschlossener Stellung der Klappe oder Tür einen Dichtungsstreifen (4a) aufnimmt, der Teil eines am Umfangsrand der Öffnung (2) angebrachten Gummi- oder Kunststoffprofils (4) ist, und daß der Umfangsrandstreifen (5) in eine U-förmige Halterung (6) eingreift und mindestens ein Teil der U-förmigen Halterung einen Teil des Scharniers (7) bildet.

## Revendications

1. Véhicule du type d'une caravane ou d'une autocaravane, dont au moins une paroi (1) est munie d'une ouverture (2) qui peut être obturée par une porte ou un abattant articulé (3) réalisé en une mousse plastique, recouverte du côté interne et du côté externe par une peau ou une feuille, caractérisé en ce que l'abattant ou la porte possède une bande marginale périphérique (5) à paroi relativement mince, qui passe par l'intermédiaire d'une partie de transition (8a, 8b) à paroi relativement mince à une partie restante de l'abattant ou de la porte à paroi relativement épaisse, en ce que ladite partie de transition (8a, 8b) comporte une bride (8a) s'étendant vers l'extérieur à partir de la bande marginale périphérique (5) et une bride (8b) s'étendant parallèlement à la paroi et fusionnant avec la partie à paroi épaisse, dans lequel une chambre (10) est délimitée par la face externe de la paroi (1), par la surface interne de la partie de transition (8a, 8b) et par la surface marginale de la partie à paroi épaisse s'étendant vers l'intérieur, chambre dans laquelle, dans la position fermée de l'abattant ou de la porte, vient se loger une bande d'étanchéification (4a) faisant partie d'un profilé (4) en caoutchouc ou en plastique disposé sur le bord périphérique de ladite ouverture (2) et, en ce que la bande marginale périphérique (5) vient se loger dans un cadre en U (6), au moins une partie du cadre en U faisant partie de l'articulation (7).
